(19) Europäisches Patentamt
European Patent Office
Office européen des brevets

(11) **EP 3 595 236 A1**

(12) **DEMANDE DE BREVET EUROPEEN**

(43) Date de publication:
**15.01.2020 Bulletin 2020/03**

(51) Int Cl.:
***H04L 9/08*** (2006.01)

(21) Numéro de dépôt: **19185311.8**

(22) Date de dépôt: **09.07.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **09.07.2018 FR 1856283**

(71) Demandeur: **IDEMIA France**
**92400 Courbevoie (FR)**

(72) Inventeur: **PORTERET, Cyril**
**92400 Courbevoie (FR)**

(74) Mandataire: **Regimbeau**
**20, rue de Chazelles**
**75847 Paris Cedex 17 (FR)**

(54) **PROCÉDÉ DE GÉNÉRATION SYNCHRONE D'ALÉA EN VUE DE TRAITEMENTS CRYPTOGRAPHIQUES**

(57) L'invention concerne un procédé de transmission sécurisée de données entre un dispositif (2) client et un dispositif (1) vérifieur, comprenant les étapes suivantes :
(a) acquisition simultanée, par le dispositif vérifieur et le dispositif client, d'un signal analogique ambiant (S),
(b) calcul, par un processeur (10) du dispositif vérifieur, d'un premier aléa obtenu en appliquant une transformation au signal analogique ambiant, et calcul, par un processeur du dispositif client, d'un deuxième aléa obtenu en appliquant la transformation au signal analogique ambiant,
(c) transmission d'une première donnée cryptographique au moins en partie chiffrée à l'aide d'une fonction de chiffrement dépendant du deuxième aléa, via un signal analogique de donnée, par des moyens (24) d'émission de signal analogique du dispositif (2) client à des moyens (15) d'acquisition de signal analogique du dispositif (1) vérifieur,
(d) traitement de la première donnée par le dispositif vérifieur, comprenant un déchiffrement de la première donnée.

**FIG. 1a**

**Description**

**DOMAINE TECHNIQUE DE L'INVENTION ET ETAT DE LA TECHNIQUE**

La présente invention se rapporte à la transmission hors-ligne (« off-line ») de données cryptographiques dans un contexte d'échange de données sécurisées entre des dispositifs informatiques. Elle s'applique de façon avantageuse pour l'authentification d'un dispositif client auprès d'une autorité de contrôle.

Une variété de situations nécessite un échange sécurisé hors-ligne (« off-line ») de données cryptographiques entre un dispositif vérifieur (considéré comme fiable, et potentiellement doté d'un accès à des données confidentielles) et un dispositif client.

Plusieurs algorithmes cryptographiques connus nécessitent dans un premier temps le partage par les deux dispositifs d'une donnée générée aléatoirement, par exemple un aléa généré à l'aide d'un générateur d'aléa (ou « Random Number Generator » selon la terminologie anglosaxonne courante). C'est notamment le cas d'un grand nombre d'algorithmes d'authentification, reposant sur une preuve de connaissance par le dispositif client d'une clé secrète dont le dispositif vérifieur dispose. On peut citer par exemples les « algorithmes défi-réponse ». Le dispositif vérifieur communique l'aléa (qui constitue le défi) et le dispositif client retourne une donnée calculée à partir de cet aléa et d'une clé secrète, cette donnée ne permettant pas à elle seule de remonter à la clé secrète. Ainsi, même si cette donnée est interceptée, il est difficile pour un attaquant de remonter à la clé secrète.

Pour la génération de l'aléa, il est connu d'embarquer un générateur d'aléa dans le dispositif vérifieur. Le partage du défi par le dispositif vérifieur à destination du dispositif client nécessite qu'un canal de communication soit établi entre les deux dispositifs, typiquement via une connexion réseau sans fil : réseau Internet, 3G, 4G, NFC (« Near-Field Communication »), Bluetooth... Les algorithmes cryptographiques connus nécessitant le partage d'un aléa sont donc inutilisables dans un contexte où une bonne connexion réseau n'est pas disponible et/ou lorsque les utilisateurs ne souhaitent pas utiliser le réseau disponible. Par ailleurs, l'établissement de la communication réseau entre le dispositif client et le dispositif vérifieur peut être fastidieux, par exemple si une connexion Bluetooth est difficile à établir ou s'il faut sélectionner une connexion Bluetooth parmi une grande variété de connexions disponibles. La transmission de données cryptographiques via une connexion réseau peut échouer ou donner lieu à des erreurs de transmission, ce qui remet en cause la bonne mise en oeuvre des traitements cryptographiques subséquents.

En outre, un attaquant distant qui intercepte les communications entre le dispositif vérifieur et le dispositif client peut obtenir la valeur de l'aléa. La sécurité desdites communications n'est pas optimale.

**PRESENTATION GENERALE DE L'INVENTION**

Il existe donc un besoin pour un procédé de transmission de données entre deux dispositifs informatiques, dans lequel une donnée générée de manière aléatoire, et nécessaire à des traitements cryptographiques, dispose d'un très haut niveau de sécurité.

Il existe également un besoin pour un procédé de transmission de données qui pourrait être utilisé même en l'absence de connexion réseau, tout en garantissant l'intégrité de la donnée transmise.

De préférence, le procédé souhaité est simple et rapide d'utilisation.

La présente invention répond à ces besoins avec, selon un premier aspect, un procédé de transmission sécurisée hors-ligne (« off-line ») de données entre un dispositif informatique client et un dispositif informatique vérifieur d'après la revendication 1.

Le procédé de l'invention comprend la génération synchrone d'un premier aléa par le dispositif vérifieur et d'un deuxième aléa par le dispositif client, à partir d'un même signal analogique ambiant acquis de façon simultanée par les deux dispositifs. Le premier aléa et le deuxième aléa correspondent à une même donnée aléatoire bénéficiant d'un très haut niveau de sécurité, puisque pour acquérir de façon masquée la valeur de l'aléa, un attaquant extérieur devrait acquérir le même signal analogique ambiant que le dispositif vérifieur et le dispositif client.

De plus, il n'est pas nécessaire de disposer d'une connexion réseau entre le dispositif client et le dispositif vérifieur.

Un autre avantage est que l'acquisition du signal analogique ambiant peut être réalisée de manière simple par des moyens ubiquitaires des appareils mobiles (comme un microphone, un appareil photographique, un capteur de mouvement, etc.).

Un avantage additionnel est de permettre l'envoi par le dispositif client d'une donnée chiffrée à destination du dispositif vérifieur, sans que les deux dispositifs n'aient nécessairement échangé des clés de chiffrement au préalable. Etant donné que la fonction de chiffrement utilisée par le dispositif client dépend de la donnée aléatoire obtenue de manière synchrone par les deux dispositifs, le dispositif vérifieur peut déchiffrer la donnée.

Le procédé défini ci-avant peut présenter, de manière optionnelle, les caractéristiques suivantes prises seules ou en l'une quelconque de leurs combinaisons techniquement possibles :

- le signal physique ambiant est un signal de mouvement synchrone des deux dispositifs,
  l'acquisition simultanée dudit signal étant exécutée par l'intermédiaire d'un capteur de mouvement du dispositif vérifieur et d'un capteur de mouvement du dispositif client,
- le dispositif vérifieur et le dispositif client sont accolés pendant l'acquisition du signal de mouvement synchrone, pour garantir la similarité du signal acquis par les deux capteurs de mouvement ;

- les deux capteurs de mouvement sont des gyroscopes, le signal physique étant représentatif de variations de position angulaire des deux dispositifs ;
- le signal physique ambiant est un signal sonore émis dans l'environnement des deux dispositifs, l'acquisition simultanée dudit signal étant exécutée par l'intermédiaire d'un microphone du dispositif vérifieur, et d'un microphone du dispositif client ;
- l'envoi de la première donnée cryptographique est réalisé par l'intermédiaire d'un réseau de communication sans fil, tel qu'un réseau de téléphonie mobile ou un réseau Internet ;
- le signal analogique de donnée est un signal lumineux, le signal analogique pouvant être un code « Quick Response » ou « QR Code », ou une stéganographie, ou un code-barres,
les moyens d'émission de signal analogique du dispositif client étant un écran d'affichage, les deuxièmes moyens d'acquisition de signal analogique du dispositif vérifieur étant un dispositif imageur, de préférence un appareil photographique.

Un procédé de l'invention présentant cette caractéristique supplémentaire est très avantageux, puisque l'intégralité de la transmission des données peut être réalisée sans connexion réseau entre les deux dispositifs, y compris les traitements cryptographiques qui suivent le partage de l'aléa ;

- le dispositif vérifieur et le dispositif client sont des dispositifs mobiles, de préférence des téléphones intelligents dits « smartphones » ;
- la première donnée cryptographique est un message comprenant un secret chiffré à l'aide de la fonction de chiffrement ;
- un chiffré du message est générée par le dispositif vérifieur et transmise au dispositif client à l'étape c), ledit chiffré utilisant une clé de chiffrement dépendant du deuxième aléa ;
- le message est un document d'identité, ou un ticket de paiement, ou un message textuel.

L'invention vise selon un deuxième aspect un dispositif informatique comprenant :

un processeur,
une mémoire configurée pour qu'y soient enregistrées des données cryptographiques,
et des moyens d'acquisition de signal analogique,
le processeur étant configuré pour :

recevoir un signal analogique ambiant acquis par un capteur du dispositif, appliquer une transformation au signal analogique ambiant reçu, pour obtenir un aléa,
recevoir une donnée cryptographique transmise par un deuxième dispositif informatique, via un signal analogique de donnée transmis aux moyens d'acquisition de signal analogique,
et appliquer un traitement cryptographique à ladite donnée cryptographique.

Un dispositif de l'invention peut présenter en outre les caractéristiques optionnelles suivantes :

- le capteur est un capteur de mouvement, par exemple un gyroscope, et/ou un microphone ;
- le dispositif comprend en outre un écran d'affichage et un dispositif imageur.

Enfin, selon un troisième aspect et un quatrième aspect, l'invention concerne respectivement un produit programme d'ordinateur comprenant des instructions de code pour l'exécution d'un procédé de transmission de données tel que défini ci-avant, et des moyens de stockage lisibles par ordinateur sur lesquels sont préenregistrées des instructions de code pour l'exécution d'un procédé tel que défini ci-avant.

## PRESENTATION GENERALE DES FIGURES

D'autres caractéristiques, buts et avantages de l'invention ressortiront de la description qui suit, qui est purement illustrative et non limitative, accompagnée des dessins annexés parmi lesquels :

la **Figure 1a** représente schématiquement un système selon un premier mode de réalisation, adapté pour la mise en oeuvre d'un procédé de transmission de données ;
la **Figure 1b** représente schématiquement un système selon un deuxième mode de réalisation, adapté pour la mise en oeuvre d'un procédé de transmission de données ;
la **Figure 2** illustre les étapes d'un exemple de procédé de transmission de données ;
la **Figure 3** illustre des échanges de données entre un dispositif client et un dispositif vérifieur.

## DESCRIPTION DETAILLEE DE MODES DE REALISATION

Dans toute la suite, par « donnée cryptographique » on entendra une donnée qui peut être manipulée par un processeur, et qui intervient dans un algorithme cryptographique. On peut citer comme exemples d'algorithmes cryptographiques des algorithmes de signature, de chiffrement de message, de hachage de données, d'authentification, etc.
Par ailleurs, par « signal analogique », on entend un signal à variation continue qui correspond à un phénomène physique, le signal analogique n'étant pas un signal numérique. Des exemples typiques de signaux analogiques sont les signaux lumineux (préférentiellement en lumière visible), ou les signaux vibratoires (préférentiellement acoustiques, i.e. les signaux sonores). On entendra en particulier par « signal analogique ambiant » un signal analogique que plusieurs dispositifs informatiques peuvent acquérir en même temps dans un lieu donné, ce signal étant disponible dans l'environnement desdits dispositifs. Plus précisément, le caractère « ambiant » signifie que le signal est émis dans l'environnement des deux dispositifs, et non par l'un ou l'autre desdits dispositifs (i.e. qu'aucun des deux n'en est à l'origine). Pour reformuler encore, le signal analogique ambiant est présent par défaut dans le milieu, de façon ubiquitaire, et on comprendra qu'il est uniquement acquis par lesdits dispositifs. Ainsi, le signal analogique ambiant est représentatif d'un environnement donné et donc le fait que les deux dispositifs disposent d'un même signal analogique ambiant permet de prouver qu'ils étaient au même endroit au même moment.

Dans la suite, des éléments similaires dans les dessins annexés seront désignés par un même signe de référence.

### *Exemples de systèmes vérifieur-client*

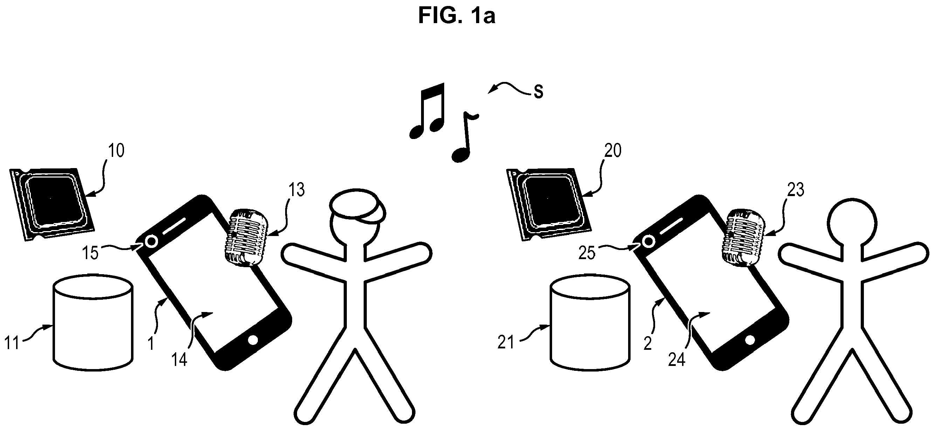

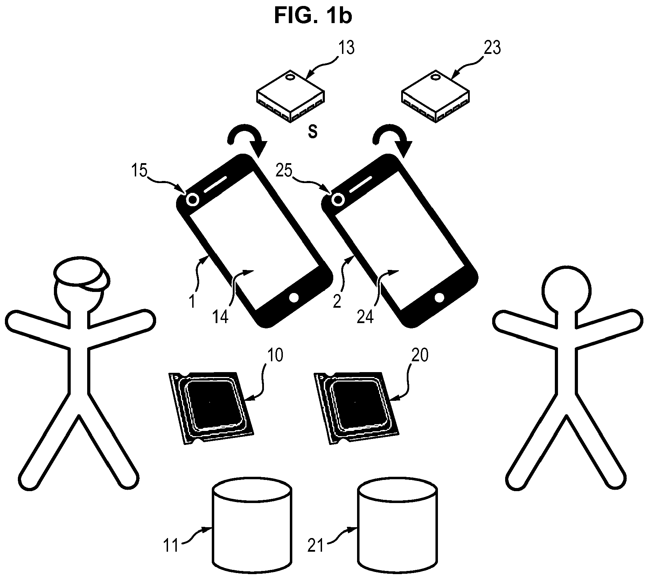

Les Figures 1a et 1b en annexe correspondent à deux modes de réalisation avantageux de systèmes adaptés pour la mise en oeuvre d'un procédé de l'invention, comprenant un dispositif vérifieur 1, et un dispositif client, ou encore dispositif utilisateur, désigné par la référence 2.

Par « dispositif vérifieur » on entend un dispositif rattaché à une autorité de contrôle. Il peut s'agir d'un dispositif tel qu'un « smartphone » ou une tablette mobile utilisé par un individu habilité à réaliser le contrôle, ou bien d'un dispositif autonome. De manière avantageuse, le dispositif vérifieur peut disposer d'un accès à des données permettant de contrôler l'identité d'individus, ou permettant de contrôler leur appartenance à un groupe (par exemple, le groupe des personnes ayant acheté un ticket pour participer à un événement).

Par « dispositif client » on entend un dispositif détenu par un individu qui n'appartient pas à une autorité de contrôle, pouvant être par exemple un smartphone ou une tablette mobile.

La **Figure 1a** illustre schématiquement un premier exemple de système comprenant un dispositif vérifieur 1 et un dispositif client 2.

Le dispositif 1 comprend des moyens de traitement de données 10, par exemple un processeur, et des moyens de stockage de données 11, comme une mémoire vive ou une mémoire morte.

De façon importante, le dispositif 1 comprend des premiers moyens 13 d'acquisition d'un signal analogique, pour l'acquisition d'un signal analogique ambiant tel que défini ci-avant. Dans l'exemple de la Figure 1a, les premiers moyens d'acquisition 13 correspondent à un microphone qui peut acquérir des signaux sonores.

Optionnellement, le dispositif 1 comprend également des moyens 14 d'émission d'un signal analogique, pour l'émission d'un « signal analogique de donnée » comme il sera défini ci-après. Ces moyens 14 d'émission peuvent, ou non, correspondre au même type de signaux analogiques que ceux acquis par les moyens 13. comme un écran d'affichage. Optionnellement, le dispositif 1 comprend des deuxièmes moyens 15 d'acquisition d'un signal analogique, pour la réception d'un signal analogique de donnée, comme un appareil photographique. Les deuxièmes moyens 15 d'acquisition de signal analogique peuvent être confondus avec les premiers moyens 13 d'acquisition, ou être différents. On citera comme exemples de moyens d'émission alternatifs : un flash lumineux, un vibreur, un transducteur électroacoustique (comme un haut-parleur), et comme exemples de moyens d'acquisition : un microphone, des accéléromètres.

Il est à noter que le processeur 10 est configuré pour appliquer une transformation mathématique au signal analogique ambiant et éventuellement sauvegarder le résultat de la transformation. Par « transformation » on entend une opération permettant d'obtenir à partir du signal acquis une donnée cryptographique, dont le résultat est prédictible, i.e. l'application de la transformation à un même signal donne en résultat une même donnée. De préférence, la transformation appliquée permet de minimiser l'impact d'un éventuel bruit de mesure.

Le dispositif vérifieur 1 peut en outre disposer d'un accès à des données permettant de réaliser des traitements cryptographiques.

Le dispositif 2 comprend des moyens de traitement de données 20, comme un processeur. Le processeur 20 est similaire au processeur 10 tel que défini ci-avant ; notamment, le processeur 20 est configuré pour mettre en oeuvre une même transformation à partir de signaux analogiques ambiants acquis. Le dispositif 2 comprend en outre des moyens de stockage de données 21, comme une mémoire vive ou une mémoire morte. Le dispositif client 2 comporte aussi des premiers moyens 23 d'acquisition d'un signal analogique, qui sont de manière importante configurés pour acquérir le même type de signal analogique ambiant que les moyens 13 du dispositif 1.

De manière générale, le dispositif client 2 peut présenter toutes les caractéristiques définies ci-avant du dispositif vérifieur 1 (sauf l'accès à des données confidentielles permettant de réaliser des traitements cryptographiques), et être similaire au dispositif vérifieur 1.

Optionnellement, le dispositif client 2 dispose de moyens 24 d'émission de signal analogique, comme par exemple un écran d'affichage, ainsi que de deuxièmes moyens 25 d'acquisition d'un signal analogique comme par exemple un appareil photographique.

Dans l'exemple de procédé décrit dans la suite, les moyens 15 et 25 d'acquisition de signal analogique correspondent à un appareil photographique situé sur la face avant respectivement du dispositif 1 et du dispositif 2, configurés pour prendre une photographie d'un QR Code affiché par des écrans 14 et 24. Les deux appareils photographiques 15 et 25 peuvent fonctionner en mode autoportrait, aussi dit « mode selfie » de sorte que les moyens 14 et 25 d'une part, et 15 et 24 d'autre part, se fassent simultanément face pour un échange interactif facile de signaux visuels.

Avantageusement, les dispositifs 1 et 2 ne sont pas connectés via une connexion réseau pour la mise en oeuvre du procédé de la suite. Cependant, les dispositifs 1 et 2 peuvent en alternative disposer d'une connexion Internet via le Wi-Fi, la 3G ou la 4G ou une connexion mutuelle via Bluetooth.

La **Figure 1b** illustre un deuxième exemple de système comprenant un dispositif vérifieur 1 et un dispositif client 2.

Les dispositifs 1 et 2 peuvent être similaires aux dispositifs décrits ci-avant en relation à la Figure 1a, sauf en ce qui concerne les moyens 13 et 23 d'acquisition de signal analogique qui correspondent au signal analogique ambiant : ici, les dispositifs 1 et 2 comprennent, respectivement comme moyens 13 et 23, des capteurs de mouvement. Avantageusement, lesdits capteurs 13 et 23 sont des gyroscopes. Les moyens 13 et 23 sont notamment configurés pour acquérir des variations de position angulaire des deux dispositifs 1 et 2, par exemple les variations de position angulaire d'un plan parallèle à la face avant et à la face arrière desdits dispositifs.

On notera que les dispositifs 1 et 2 pourraient comprendre à la fois un microphone et un capteur de mouvement comme moyens d'acquisition de signal analogique ambiant.

Dans la suite, des exemples de procédés de transmission de données, comprenant une génération synchrone d'un aléa suivie d'une authentification du dispositif client 2 auprès du dispositif vérifieur 1, seront décrits en relation au système de la Figure 1a - le signal analogique ambiant étant un signal sonore. L'homme du métier saura cependant transposer l'enseignement de ces exemples pour la mise en oeuvre d'un tel procédé par le système de la Figure 1b, et plus généralement pour la mise en oeuvre de tout procédé de transmission de données cryptographiques qui comprendrait la génération préalable d'une donnée aléatoire partagée entre deux dispositifs.

### *Cas d'une authentification du client via un protocole CHAP*

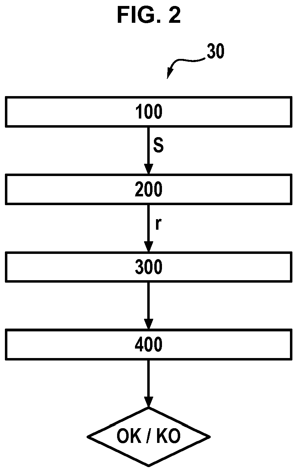

La **Figure 2** représente schématiquement des étapes d'un procédé 30 d'authentification du dispositif client 2 auprès du dispositif vérifieur 1. L'authentification est ici réalisée selon un protocole de type CHAP, pour « Challenge-Handshake Authentification Protocol ».

A titre d'exemple, le dispositif client 2 peut appartenir à un individu ayant préalablement payé et reçu un ticket de participation à un événement (comme une place de concert). L'individu utilise le dispositif 2 qu'il détient pour montrer le ticket à un vigile qui détient le dispositif vérifieur 1. Le dispositif vérifieur 1 lance alors une authentification du dispositif client 2, pour prouver que l'individu est un acheteur authentique de ticket. Les dispositifs 1 et 2 se situent dans un lieu où la connexion réseau est faible ou inexistante, ou l'utilisateur et le vérifieur ne souhaitent pas échanger par le biais de la connexion réseau disponible.

Le principe, bien connu de l'homme du métier, d'un procédé d'authentification CHAP, qui est un procédé de type défi-réponse, est le suivant. Le dispositif vérifieur 1 et le dispositif client 2 partagent d'abord une donnée $r$ appelée « nonce » (i.e. un nombre arbitraire, c'est-à-dire un aléa à usage unique, de l'anglais « number used once »). L'usage d'un tel nombre arbitraire renforce grandement la sécurité du procédé, puisqu'une valeur différente et aléatoire de nonce est utilisée à chaque authentification, rendant difficiles des attaques par rejeu.

Par ailleurs, le dispositif vérifieur 1 connaît une clé privée k dont on veut vérifier la connaissance par le dispositif client 2. Dans le contexte de la participation à un concert, la clé privée k peut être un élément secret communiqué au dispositif client 2 après finalisation de l'achat.

Au cours du protocole CHAP, le dispositif client 2 applique une fonction cryptographique f prédéterminée au nonce r et à la clé privée k, puis calcule un haché (de l'anglais « hash », également appelé « empreinte cryptographique ») du résultat donné par cette fonction f. Le dispositif vérifieur 1 applique de son côté la même fonction f au nonce et à la clé privée, puis calcule le haché à l'aide de la même fonction de hachage. L'authentification est considérée comme réussie lorsque la valeur de haché retournée par le dispositif client 2 et la valeur de haché calculée indépendamment par le dispositif vérifieur 1 sont égales.

Le procédé d'authentification 30 selon le protocole CHAP comprend les étapes suivantes.

A une étape optionnelle non représentée sur les figures, le dispositif client 2 transmet au dispositif vérifieur 1 un signal de réveil. Cette étape peut être omise, par exemple si le dispositif vérifieur 1 est à l'initiative de l'authentification.

Une première phase du procédé 30 consiste pour les dispositifs 1 et 2 à obtenir une même valeur de nonce r, le nonce r jouant ici le rôle d'aléa.

Une première étape **(a)** comprend l'acquisition 100 simultanée, par les deux dispositifs 1 et 2, d'un même signal analogique ambiant S. Le signal analogique ambiant S est ici un signal sonore. Ce peut être un signal sonore disponible dans l'environnement des dispositifs 1 et 2, en particulier un bruit de fond, les dispositifs 1 et 2 étant proches. Le signal sonore S est par exemple traité comme un signal ou une suite de signaux ayant une fréquence précise, cette fréquence pouvant varier pour donner lieu à des valeurs différentes de nonce r. Le signal S est acquis par les premiers moyens 13 et 23 d'acquisition de signal analogique des dispositifs 1 et 2, ici les microphones.

En alternative, et notamment si le procédé 30 est mis en oeuvre par le système de la Figure 1b, le signal analogique ambiant S peut correspondre à un mouvement synchrone des deux dispositifs 1 et 2 ensemble. Les premiers moyens 13 et 23 d'acquisition de signal analogique sont alors des capteurs de mouvement. Par « mouvement synchrone » des deux dispositifs 1 et 2, on entend que le mouvement absolu acquis par chacun des deux capteurs de mouvement est supposé être sensiblement identique. Le mouvement synchrone est obtenu en faisant subir des contraintes mécaniques identiques aux dispositifs lors du mouvement.

Par exemple, un mouvement synchrone des dispositifs 1 et 2 peut être obtenu en accolant les deux dispositifs, face contre face, ou côté contre côté, pendant l'acquisition par les capteurs de mouvement 12 et 22.

Un avantage du fait que les dispositifs soient déplacés ensemble et accolés est de garantir la simultanéité et la similarité du signal acquis par les deux capteurs de mouvement.

Le procédé 30 se poursuit par une deuxième étape **(b)** comportant le calcul 200 de l'aléa (ici du nonce r) à partir du signal analogique ambiant S acquis. Au cours de l'étape 200, le dispositif vérifieur 1 et le dispositif client 2 calculent respectivement, et indépendamment, un premier aléa et un deuxième aléa, qui correspondent sensiblement à la même donnée aléatoire. Les deux dispositifs 1 et 2 sont configurés pour appliquer une même transformation T au signal S acquis, de sorte à obtenir un même nonce r.

Par exemple, les processeurs 10 et 20 réalisent la transformation T suivante ; sélection de la fréquence fondamentale v du signal sonore S, puis application à cette fréquence fondamentale v d'une application mathématique A, la valeur du nonce étant $r = A(v)$.

Les étapes (a) et (b) prises en association présentent le grand avantage de permettre un « partage » de la valeur du nonce r), sans qu'il n'y ait la moindre communication de données entre les dispositifs 1 et 2.

Un premier intérêt est de rendre très difficile l'interception par un attaquant tiers de la valeur du nonce r ; un deuxième intérêt est que les étapes (a) et (b) peuvent être mises en oeuvre en l'absence de toute connexion réseau.

Le procédé 30 se poursuit par une étape **(c)** comprenant la transmission d'une première donnée cryptographique D par le dispositif client 2. La donnée D correspond ici à la réponse du dispositif client 2 dans le cadre de l'algorithme CHAP.

Au cours de cette étape (c), le dispositif client 2 applique une fonction cryptographique quelconque f prenant en entrée d'une part le deuxième aléa obtenu précédemment (le nonce r), et d'autre part la clé privée k. La fonction f a été préalablement partagée entre les dispositifs 1 et 2. Par exemple, la fonction f peut être une simple addition, auquel cas $f(r,k) = r+k$. Ici, la première donnée cryptographique vaut $D = H(f(r,k))$ avec H une fonction de hachage.

Le dispositif client 2 réalise ensuite la transmission 300 au dispositif vérifieur 1 de la première donnée cryptographique D calculée à partir de la valeur du deuxième aléa. Selon une première variante possible, le dispositif client 2 transmet un message au dispositif vérifieur 1 à l'aide d'une connexion réseau de type 3G, 4G, Bluetooth...

Selon une deuxième variante possible, la donnée cryptographique D est donc communiquée via un deuxième signal analogique noté C, qui est un signal analogique de donnée. Ce signal analogique C de donnée diffère du signal analogique S ambiant, en ce qu'il est émis par le dispositif client 20.

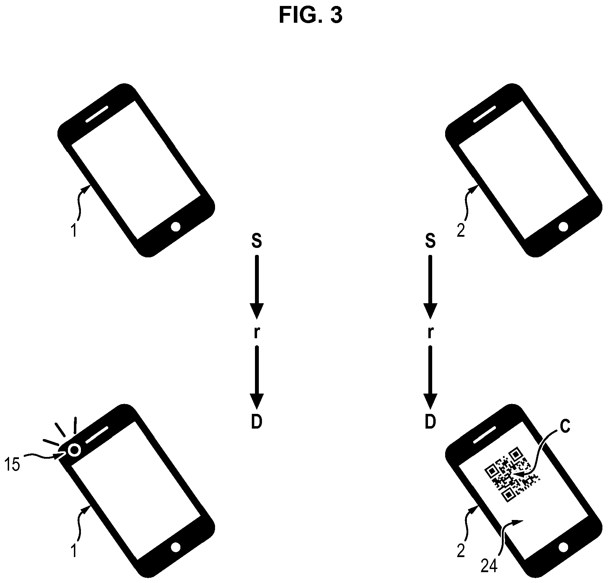

De façon avantageuse, le signal analogique C de donnée est un code visuel sous forme de QR Code représentatif de la valeur $H(f(r,k))$. Le mode de réalisation où la première donnée cryptographique D est transmise sous forme de QR Code est représenté sur la **Figure 3**, qui illustre schématiquement la mise en oeuvre par les dispositifs 1 et 2 (pouvant par exemple correspondre aux Figures la ou 1b) du procédé 30. A la suite de la détermination de la donnée D, le dispositif client 2 affiche sur son écran d'affichage 24 le QR Code C représentatif de la donnée D.

Alternativement, le signal C pourrait être un code visuel dans lequel la valeur $H(f(r,k))$ est dissimulée par stéganographie, ou un code à barres tel qu'un code EAN (« Electronic Article Number »).

On peut prévoir une étape supplémentaire d'acquisition par le dispositif client 2 d'un signal de contrôle transmis par le dispositif vérifieur 1, pour vérifier l'intégrité de la transmission.

Cette deuxième variante est avantageuse car même pour communiquer la donnée D, les deux dispositifs n'ont pas besoin de connexion réseau.

De retour à la Figure 2, le procédé 30 se poursuit par une étape **(d)** de traitement cryptographique, ici un traitement mis en oeuvre par le dispositif vérifieur 1 en vue de l'authentification. Dans cet exemple, l'étape (d) comprend la génération d'une deuxième donnée cryptographique qui correspond à la valeur attendue de $H(f(r, k))$, et la vérification 400 qu'il y a identité entre la première donnée cryptographique D transmise à l'étape (c) par le dispositif client 2 et la deuxième donnée cryptographique calculée.

Il est à noter que la génération de la deuxième donnée cryptographique pourrait être réalisée par le dispositif vérifieur 1 à n'importe quel moment entre le calcul 200 de la valeur du nonce r et la vérification 400.

Pour tenir compte d'éventuelles disparités entre la première donnée cryptographique générée par le dispositif client 2 et la deuxième donnée cryptographique générée par le dispositif vérifieur 1, l'étape 400 peut comprendre, de manière optionnelle, un calcul de distance entre la première donnée cryptographique et la deuxième donnée cryptographique.

La vérification 400 retourne comme résultat un « OK » ou un « KO ». Si la vérification est positive, le dispositif client 2 est ici considéré comme authentifié. En alternative, des traitements cryptographiques ultérieurs peuvent avoir lieu pour terminer l'authentification.

Dans cet exemple, si la vérification est positive, l'individu qui détient le dispositif client 2 a prouvé qu'il avait acquis de manière régulière un ticket électronique de concert, puisqu'il avait en sa possession la clé privée k. L'authentification de l'individu qui détient le dispositif client 2 est donc terminée, et l'individu est autorisé à rentrer dans la salle de concert.

### Cas d'une transmission de message par le dispositif client

Selon un mode de réalisation alternatif du procédé 30, le dispositif client 2 transmet un message M chiffré destiné au dispositif vérifieur 1, après génération synchrone d'un aléa par le vérifieur 1 et le client 2.

De manière avantageuse, le message M est un document d'identité d'un individu qui détient le dispositif client 2. Alternativement, le message M peut être un ticket de paiement, un message de texte, ou bien de manière générale tout contenu informatique pouvant être transmis par le dispositif client 2 au dispositif vérifieur 1.

L'aléa obtenu par génération synchrone par les deux dispositifs, conformément à l'étape (a) décrite ci-avant en relation à la Figure 2, peut être utilisé pour obtenir une clé de chiffrement ou plusieurs clés de chiffrement, par exemple une clé privée k et une clé publique Cp dans le cas d'un chiffrement asymétrique.

Ainsi dans le cas d'un chiffrement asymétrique, le dispositif client 2 est alors en mesure d'utiliser la clé privée k pour générer un chiffré du message M, à l'aide d'une fonction de chiffrement Ch. Le chiffré Ch(M) dépend par exemple de la clé privée k, elle-même obtenue à partir du deuxième aléa obtenu par le client 2 après la génération synchrone d'aléa, et dépend d'un haché H(M) du message M.

Le dispositif vérifieur est ensuite en mesure de déchiffrer le chiffré Ch, à l'aide de la clé publique Cp.

Ledit chiffré comprend par exemple une signature du message M.

Un avantage est que le vérifieur 1 et le client 2, qui n'ont pas nécessairement échangé des clés cryptographiques au préalable, sont en mesure de se communiquer un message crypté rapidement et de manière sécurisée. L'utilisation d'un signal analogique de donnée, pour la transmission du chiffré du message par le dispositif client 2 vers le dispositif vérifieur 1, renforce la sécurité de l'échange de données vis-à-vis d'attaques potentielles.

Dans le cas d'un chiffrement symétrique, le dispositif client 2 est alors en mesure d'utiliser la clé de chiffrement pour générer un chiffré du message M, à l'aide d'une fonction de chiffrement symétrique ChS. Le chiffré ChS(M) dépend de la clé de chiffrement, elle-même obtenue à partir du deuxième aléa obtenu par le client 2 après la génération synchrone d'aléa, et dépend d'un haché H(M) du message M.

Le dispositif vérifieur est ensuite en mesure de déchiffrer le chiffré ChS, à l'aide de la clé de chiffrement. Là encore, le vérifieur 1 et le client 2 peuvent échanger un message de manière sécurisée sans qu'un échange préalable de clés cryptographiques ne soit nécessaire, et le cas échéant sans connexion réseau entre les deux dispositifs 1 et 2.

Dans le cas d'une signature numérique du message M, par exemple une signature de type DSA pour « Digital Signature Algorithm », des traitements cryptographiques permettent non seulement d'authentifier le dispositif client 2, mais aussi de prouver l'intégrité du message M.

De façon connue, le calcul d'une signature DSA de message utilise une clé publique $(p,q,g,y)$ et une clé privée $k$.

On rappelle qu'un procédé de génération d'une clé publique et d'une clé privée selon l'algorithme DSA comprend les étapes suivantes :

- Choisir un nombre premier p de longueur L telle que $512 \leq L \leq 1024$, et L est divisible par 64 ;
- Choisir un nombre premier q de 160 bits, de telle façon que p - 1 = q*c, avec c un entier ;
- Choisir h, avec 1 < h < p - 1 de manière à construire g tel que g= h^c mod p > 1 ;
- Générer aléatoirement un nombre k, avec 0 < k < q ;
- Calculer y= g^k mod p.

Selon un exemple, la signature DSA d'un message M par le dispositif client 2, ici la signature du document d'identité, commence par un calcul de « haché » H(M) à l'aide d'une fonction de hachage comme le SHA256, puis se poursuit par le calcul de deux valeurs $s_1$ et $s_2$ telles que :

$$s_1 = (g^{\wedge}r \bmod p) \bmod q;$$

$$s_2 = (H(M) + s1*k) *r^{\wedge} (-1) \bmod q,$$

où $r$ est un nonce qui doit être tiré aléatoirement pour chaque signature DSA. Le nonce permet de garantir que, même en cas d'attaque par rejeu, les données interceptées ne pourraient pas être réutilisées pour des authentifications frauduleuses.

Dans le cadre de cet exemple, la transmission du message M par le dispositif client 2 et son traitement par le dispositif vérifieur 1 se font selon des étapes (a) à (d) similaires aux étapes décrites ci-avant en relation au protocole CHAP, avec les mêmes variantes possibles :

- Au cours de l'étape (a), le dispositif vérifieur 1 et le dispositif client 2 acquièrent un même signal S analogique ambiant ;
- Au cours de l'étape (b), le dispositif vérifieur 1 et le dispositif client 2 appliquent une même transformation T au signal S acquis, de sorte à obtenir respectivement un premier aléa et un deuxième aléa ;
- Au cours de l'étape (c), le dispositif 2 réalise le calcul d'une première donnée cryptographique D, qui correspond dans le cas de la signature DSA au couple $(s_1, s_2)$ tel que défini ci-avant, puis transmet ladite donnée en même temps que le message M, par exemple une image de document d'identité.

La signature du message M, plus particulièrement la partie $s_2$ de cette signature, dépend du deuxième aléa acquis par le dispositif client 2 lors de la génération synchrone de l'aléa, ainsi que de l'haché H(M) du message. La transmission de la donnée cryptographique D peut avantageusement se faire de manière « offline » à l'aide d'un signal analogique de donnée C, comme décrit ci-avant. De façon avantageuse, le message M est alors également transmis via ce même signal ou un autre signal analogique de donnée.

La transmission du signal analogique C de donnée peut notamment être effectuée par les moyens 24 d'émission de signal analogique du dispositif 2 client et à destination des moyens 15 d'acquisition de signal analogique du dispositif 1 vérifieur.

- Au cours de l'étape (d), le dispositif vérifieur 1 réalise la vérification de l'intégrité du document d'identité, et de façon optionnelle l'authentification du dispositif client 2. Si les deux vérifications sont positives, le dispositif client est considéré comme valablement authentifié.

**Revendications**

1. Procédé de transmission sécurisée hors ligne de données entre un dispositif (2) informatique client et un dispositif (1) informatique vérifieur,
le procédé comprenant les étapes suivantes :

   a) acquisition (100) simultanée, par le dispositif (1) vérifieur et le dispositif (2) client, d'un signal analogique (S) ambiant,
   b) calcul (200), par un processeur (10) du dispositif (1) vérifieur, d'un premier aléa obtenu en appliquant une transformation au signal analogique (S) ambiant, et calcul, par un processeur (20) du dispositif (2) client, d'un deuxième aléa obtenu en appliquant la transformation au signal analogique (S) ambiant,
   c) transmission (300) par le dispositif (2) client, au dispositif (1) vérifieur, d'une première donnée cryptographique (D) au moins en partie chiffrée à l'aide d'une fonction de chiffrement dépendant du deuxième aléa, ladite transmission étant effectuée via un signal analogique (C) de donnée par des moyens (24) d'émission de signal analogique du dispositif (2) client vers des moyens (15) d'acquisition de signal analogique du dispositif (1) vérifieur,
   d) traitement de la première donnée cryptographique (D) par le dispositif (1) vérifieur, ledit traitement comprenant un déchiffrement de la première donnée cryptographique (D).

2. Procédé selon la revendication 1, dans lequel le signal physique (S) ambiant est un signal de mouvement synchrone des deux dispositifs (1, 2), l'acquisition (100) simultanée dudit signal étant exécutée par l'intermédiaire d'un capteur de mouvement (13) du dispositif (1) vérifieur et d'un capteur de mouvement (23) du dispositif (2) client,
le dispositif (1) vérifieur et le dispositif (2) client étant accolés pendant l'acquisition (100) du signal de mouvement synchrone, pour garantir la similarité du signal acquis par les deux capteurs de mouvement (12, 22).

3. Procédé selon la revendication 2, dans lequel les deux capteurs de mouvement (13, 23) sont des gyroscopes, le signal physique (S) étant représentatif de variations de position angulaire des deux dispositifs (1, 2).

4. Procédé selon la revendication 1, dans lequel le signal physique (S) ambiant est un signal sonore émis dans l'environnement des deux dispositifs (1, 2), l'acquisition (100) simultanée dudit signal étant exécutée par l'intermédiaire d'un microphone du dispositif (1) vérifieur, et d'un microphone du dispositif (2) client.

5. Procédé selon l'une des revendications 1 à 4, dans lequel le dispositif (1) vérifieur et le dispositif (2) client sont des dispositifs mobiles, de préférence des téléphones intelligents dits « smartphones ».

6. Procédé selon l'une des revendications 1 à 5, dans lequel le signal analogique (C) de donnée est un signal lumineux, par exemple un code « Quick Response » ou « QR Code », ou une stéganographie, ou un code-barres,
les moyens (24) d'émission de signal analogique du dispositif client (2) étant un écran d'affichage,
les deuxièmes moyens (15) d'acquisition de signal analogique du dispositif vérifieur (1) étant un dispositif imageur, de préférence un appareil photographique.

7. Procédé selon l'une des revendications 1 à 6, dans lequel la première donnée cryptographique (D) est un message (M) comprenant un secret chiffré à l'aide de la fonction de chiffrement.

8. Procédé selon la revendication 7, dans lequel un chiffré du message (M) est généré par le dispositif (1) vérifieur et transmis au dispositif (2) client à l'étape c), ledit chiffré utilisant une clé de chiffrement dépendant du deuxième aléa.

**9.** Dispositif informatique (1) comprenant :

- un processeur (10),
- une mémoire (11) configurée pour qu'y soient enregistrées des données cryptographiques (k),
- des moyens (15) d'acquisition de signal analogique,

le dispositif étant **caractérisé en ce que** le processeur est configuré pour :

recevoir un signal analogique (S) ambiant acquis par un capteur du dispositif (1),
appliquer une transformation au signal analogique ambiant reçu, pour obtenir un aléa (r),
recevoir une donnée cryptographique (D) transmise par un deuxième dispositif (2) informatique, via un signal analogique (C) de donnée transmis aux moyens (15) d'acquisition de signal analogique,
et appliquer un traitement cryptographique à ladite donnée cryptographique (D).

**10.** Dispositif selon la revendication 9, dans lequel le capteur est un capteur de mouvement, de préférence un gyroscope, et/ou comprenant comme capteur un microphone.

**11.** Dispositif selon l'une des revendications 9 ou 10, comprenant en outre un écran d'affichage (14) et un dispositif imageur (15).

**12.** Produit programme d'ordinateur comprenant des instructions de code pour la mise en oeuvre d'un procédé de transmission de données selon l'une des revendications 1 à 8 lorsque lesdites instructions de code sont exécutées par un processeur.

**13.** Moyens de stockage lisibles par ordinateur, sur lesquels sont préenregistrées des instructions de code pour la mise en oeuvre d'un procédé de transmission de données selon l'une des revendications 1 à 8.

EP 3 595 236 A1

FIG. 1b

FIG. 2

30

```
┌─────────────────────────────┐
│             100             │
└─────────────────────────────┘
              │ S
              ▼
┌─────────────────────────────┐
│             200             │
└─────────────────────────────┘
              │ r
              ▼
┌─────────────────────────────┐
│             300             │
└─────────────────────────────┘
              │
              ▼
┌─────────────────────────────┐
│             400             │
└─────────────────────────────┘
              │
              ▼
           ╱─────────╲
          ╱  OK / KO  ╲
          ╲           ╱
           ╲─────────╱
```

EP 3 595 236 A1

FIG. 3

**EP 3 595 236 A1**

Europäisches
Patentamt

European
Patent Office

Office européen
des brevets

# RAPPORT DE RECHERCHE EUROPEENNE

Numéro de la demande

EP 19 18 5311

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RENE MAYRHOFER ET AL: "Shake Well Before Use: Authentication Based on Accelerometer Data", 13 mai 2007 (2007-05-13), PERVASIVE COMPUTING; [LECTURE NOTES IN COMPUTER SCIENCE;;LNCS], SPRINGER BERLIN HEIDELBERG, BERLIN, HEIDELBERG, PAGE(S) 144 - 161, XP019079249, ISBN: 978-3-540-72036-2 | 1-3,5-13 | INV. H04L9/08 |
| Y | * sections 4, 5, 6.1, 6.2 et conclusion; figures 3, 4 * ----- | 4 | |
| Y | DOMINIK SCHU RMANN ET AL: "Secure Communication Based on Ambient Audio", IEEE TRANSACTIONS ON MOBILE COMPUTING, IEEE SERVICE CENTER, LOS ALAMITOS, CA, US, vol. 12, no. 2, 1 février 2013 (2013-02-01), pages 358-370, XP011489818, ISSN: 1536-1233, DOI: 10.1109/TMC.2011.271 | 4 | |
| A | * section 3.1 et 3.2 * ----- | 11 | DOMAINES TECHNIQUES RECHERCHES (IPC)

H04L |

Le présent rapport a été établi pour toutes les revendications

| Lieu de la recherche | Date d'achèvement de la recherche | Examinateur |
|---|---|---|
| Munich | 4 novembre 2019 | Manet, Pascal |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...................................................................................
& : membre de la même famille, document correspondant

EPO FORM 1503 03.82 (P04C02)